(19) **Europäisches Patentamt / European Patent Office / Office européen des brevets**

(11) **EP 3 745 423 A1**

(12) # EUROPEAN PATENT APPLICATION
published in accordance with Art. 153(4) EPC

(43) Date of publication:
**02.12.2020 Bulletin 2020/49**

(21) Application number: **19741884.1**

(22) Date of filing: **18.01.2019**

(51) Int Cl.:
*H01B 1/22* [(2006.01)]  *B22F 1/00* [(2006.01)]
*B22F 1/02* [(2006.01)]  *B22F 9/00* [(2006.01)]
*B82Y 30/00* [(2011.01)]  *B82Y 40/00* [(2011.01)]
*H01B 1/00* [(2006.01)]  *H01B 5/14* [(2006.01)]
*H01B 13/00* [(2006.01)]

(86) International application number:
**PCT/JP2019/001435**

(87) International publication number:
**WO 2019/142904 (25.07.2019 Gazette 2019/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.01.2018 JP 2018007788**

(71) Applicant: **DOWA Electronics Materials Co., Ltd.**
**Tokyo 101-0021 (JP)**

(72) Inventors:
• **SAITO, Hirotoshi**
  **Tokyo 101-0021 (JP)**
• **SATO, Kimitaka**
  **Tokyo 101-0021 (JP)**

(74) Representative: **Emde, Eric**
  **Wagner & Geyer Partnerschaft mbB**
  **Patent- und Rechtsanwälte**
  **Gewürzmühlstrasse 5**
  **80538 München (DE)**

(54) ## SILVER NANOWIRE INK AND METHOD FOR MANUFACTURING SAME

(57)  [Problem] To provide a silver nanowire ink having a sufficiently suppressed existing amount of coarse foreign particles, having mixed therein silver nanowires having a high effect of enhancing the conductivity of a transparent conductive film. [Solution] A silver nanowire ink intermediate product having dispersed therein silver nanowires having an organic protective agent attached to a surface thereof, having an attached amount of the organic protective agent of 1.5 to 8.0% by mass based on the total amount of the organic protective agent and silver is subjected to a dispersion treatment by a thin film revolution method, so as to control the silver nanowires in the ink to have the form having a number of folds per unit length of the wires of 20.0 per mm or less, obtained by measuring over a total wire length of 1.0 mm or more, and to provide such a property that the ink has an existing amount of particles having a particle diameter exceeding 7 $\mu$m of 50 per mL or less per unit volume of the ink, measured with a liquid borne light extinction particle counter.

[Fig.6]

EP 3 745 423 A1

**Description**

Technical Field

The present invention relates to a silver nanowire ink that is useful for forming a transparent conductor and the like, and a method for producing the same.

Background Art

In the description herein, fine metal wires having a thickness of approximately 200 nm or less are referred to as "nanowire(s)". Among them, silver nanowires are expected as a conductive material for imparting conductivity to a transparent substrate. By coating a coating liquid containing silver nanowires (i.e., a silver nanowire ink) on a transparent substrate, such as glass, PET (polyethylene terephthalate), and PC (polycarbonate), followed by removing the liquid component by evaporation or the like, the silver nanowires are brought into contact with each other on the substrate to form a conductive network, thereby achieving a transparent conductive film.

In the operation for preparing a silver nanowire ink (which may be hereinafter referred to as "ink formation"), organic components, such as a thickening substance (thickener) and a binder, are generally added to a silver nanowire dispersion liquid. Furthermore, due to such factors as the securement of wettability to a PET substrate, an ink containing a mixed solvent of water and an alcohol as the liquid medium may be prepared by adding an alcohol to a silver nanowire dispersion liquid using a water solvent in some cases. The silver nanowires generally have a structure including linear structures formed of metallic silver having an organic protective agent attached to the surface thereof, and the organic protective agent largely relates to the dispersibility of the wires in the liquid medium. For example, silver nanowires using PVP (polyvinylpyrrolidone) as the organic protective agent have lowered dispersibility in an aqueous liquid medium containing an alcohol, and thus tend to cause aggregation. On the other hand, silver nanowires using a copolymer of vinylpyrrolidone and another monomer as the organic protective agent have an advantage that the dispersibility thereof can be readily secured even in an aqueous liquid medium containing an alcohol. However, even the silver nanowires using the copolymer may form granular matters including wires entangled with each other in an ink having a thickening substance, a binder, and the like added thereto. In particular, the thickening substance added in the ink formation may not be uniformly dissolved in the liquid and may exist as gelled particles, and large granular matters may be formed through aggregation of the wires starting from the gelled particles. In a conductive coated film that is constituted by using the silver nanowire ink containing a large amount of the relatively large granular matters, the granular matters may be a factor causing a short circuit in a circuit after patterning, and may be a factor impairing the appearance through exhibition as white dots in the coated film. Accordingly, the silver nanowire ink is demanded to have an amount of coarse foreign particles including aggregated wires that is as small as possible.

PTL 1 describes the technique for decreasing the number of silver nanowire aggregates in liquid by subjecting a silver nanowire ink to agitation with a propeller and filtration with a filter. However, the dispersion method by agitation tends to damage the silver nanowires. The fold and cut of the wires in the ink (coating liquid) may be disadvantageous in forming a transparent conductive film having high conductivity.

PTL 2 describes that a silver nanowire dispersion liquid is subjected to a water flow dispersion treatment, and then a transparent conductive film is formed therewith. According to the investigation by the present inventors, however, in the water flow dispersion treatment, for largely decreasing the number of the particulate matters through sufficient breakage of the wire aggregates, it is necessary to increase significantly the turbulence flow and the shearing force in the flow channel, for example, by increasing the discharge pressure. The increase of the water flow load becomes a factor damaging the wires.

A thin film revolution method has been known as an effective measure for breaking and redispersing aggregates in liquid. The thin film revolution method is a technique for dispersing aggregated particles into single particles by applying a shearing force to the aggregated particles existing in liquid within a gap between a high-speed rotation wall surface and another wall surface existing near the outer periphery thereof. For example, PTL 3 describes the technique for dispersing a nano-conductive material in a dispersion medium by subjecting the nano-conductive material and the dispersion medium to the high-speed revolution thin film dispersion method. As a specific example of the nano-conductive material, carbon nanotubes (CNT) are exemplified.

Citation List

Patent Literatures

PTL 1: JP-A-2016-66590
PTL 2: JP-A-2016-76241
PTL 3: JP-A-2014-209573

Summary of Invention

Technical Problem

The basic characteristics demanded for a transparent conductive film include excellent conductivity. Separately, the silver nanowire ink used for forming a transparent conductive film is demanded to have a small amount of coarse foreign particles including aggregated wires, from the standpoint of the prevention of short circuit of the conductive circuit and the improvement of the appearance of the transparent conductive film. It is considered that the application of the thin film revolution method to a silver nanowire ink can efficiently break the wire aggregates while suppressing the damage of the wires. In this case, the number of the foreign particles including aggregated wires can be decreased while retaining the high proportion of the sound wires without fold or cut, thereby providing the advantage that the occurrence of short circuit and appearance failure can be suppressed while retaining the high conductivity of the transparent conductive film.

The demand of the enhancement of the performance of the transparent conductive film using silver nanowires is recently being increased than ever before. In particular, the further enhancement of the conductivity thereof is being strongly demanded, in addition to the fact that the transparent conductive film has an extremely small amount of dot-like foreign matters capable of being recognized by the naked eye in viewing the touch-sensitive panel, i.e., is excellent in "appearance". It is considered that the transparent conductive film having a small amount of dot-like foreign matters can be obtained by the dispersion technique, such as the thin film revolution method. However, it is not easy to achieve the further enhancement of the conductivity. This is because the increase of the amount of silver nanowire mixed in the transparent conductive film for enhancing the conductivity increases the haze, which deteriorates the visibility of the touch-sensitive panel. For achieving both the high conductivity and the low haze simultaneously, it is advantageous to use silver nanowires that are long and thin as much as possible, but for addressing the severe demands in recent years, there are limits to relying continuously on the modification of the dimension and shape of the wires.

An object of the invention is to provide a silver nanowire ink having a sufficiently suppressed existing amount of coarse foreign particles, having mixed therein silver nanowires having a high effect of enhancing the conductivity of the transparent conductive film.

Solution to Problem

According to the studies by the inventors, the conductivity of the transparent conductive film can be enhanced even with silver nanowires having the same dimension and shape, by decreasing the attached amount of the organic protective agent attached to the surface of the wires. However, the decrease of the attached amount of the organic protective agent promotes the aggregation of the wires, which may provide an ink having a large amount of coarse foreign particles. As a result of the various investigations, it has been found that the coarse foreign particles can be broken while retaining the sound wire form in such a manner that an ink is produced by using silver nanowires having an attached amount of an organic protective agent that is decreased to a prescribed range, and the ink is then subjected to a dispersion treatment by the thin-film revolution method. The silver nanowire ink obtained in this manner can be identified by the following item [1]. It has also been confirmed that the production of a transparent conductive film by using the silver nanowire ink can provide an effect of enhancing the conductivity derived from the decrease of the attached amount of the organic protective agent. The invention has been completed based on the knowledge.

In the description herein, the following inventions will be described for achieving the object.

[1] A silver nanowire ink containing silver nanowires having a mean diameter of 50 nm or less having an organic protective agent attached to a surface thereof, dispersed in a liquid medium, the silver nanowires having a mean aspect ratio shown by a ratio of a mean length (nm) and a mean diameter (nm) of the silver nanowires of 300 or more; on an SEM (scanning electron microscope) image of the silver nanowires, the silver nanowires having a number of folds per unit length of the wires of 20.0 per mm or less, obtained by measuring all the silver nanowires observed in a view field over a total wire length of 1.0 mm or more; the silver nanowire ink having an existing amount of particles having a particle diameter exceeding 7 $\mu$m of 50 per mL or less per unit volume of the ink, measured with a liquid borne light extinction particle counter; the silver nanowire ink having such a property that in a conductive film obtained by forming a coated film having a mean silver concertation $C_{Ag}$ per unit projected area viewed in a thickness direction of 15$\pm$2 mg/cm$^2$, with the silver nanowire ink as a coating liquid, followed by drying, on a PET (polyethylene terephthalate) substrate, the conductive film has a relationship between a sheet resistance R ($\Omega$/sq.)

of the conductive film and the $C_{Ag}$ (mg/cm$^2$) that satisfies the following expression (1):

$$R \leq 8C_{Ag} + 215 \qquad\qquad (1)$$

[2] The silver nanowire ink according to the item [1], wherein the organic protective agent is PVP (polyvinylpyrrolidone) or a copolymer of vinylpyrrolidone and another monomer.

[3] The silver nanowire ink according to the item [1], wherein the organic protective agent is a copolymer of vinylpyrrolidone and a diallyldimethylammonium salt monomer.

[4] The silver nanowire ink according to any one of the items [1] to [3], wherein the silver nanowire ink contains a water soluble cellulose ether in the liquid medium.

[5] The silver nanowire ink according to any one of the items [1] to [4], wherein the silver nanowire ink contains a urethane resin in the liquid medium.

[6] The silver nanowire ink according to any one of the items [1] to [5], wherein the silver nanowire ink has a viscosity at 25°C of from 1 to 40 mPa·s.

[7] A method for producing a silver nanowire ink, including subjecting a silver nanowire ink intermediate product obtained through a step of adding a thickening substance to a silver nanowire dispersion liquid having dispersed therein silver nanowires having an organic protective agent attached to a surface thereof, having an attached amount of the organic protective agent of 1.5 to 8.0% by mass based on the total amount of the organic protective agent and silver, having the following form (A), to a dispersion treatment by a thin film revolution method, so as to control the silver nanowires in the ink to have the following form (B), and to provide such a property that the ink has an existing amount of particles having a particle diameter exceeding 7 μm of 50 per mL or less per unit volume of the ink, measured with a liquid borne light extinction particle counter:

(A) a silver nanowire form having a mean diameter of 50 nm or less, and a mean aspect ratio shown by a ratio of a mean length (nm) and a mean diameter (nm) of 350 or more,

(B) a silver nanowire form having a mean aspect ratio shown by a ratio of a mean length (nm) and a mean diameter (nm) of 300 or more, and on an SEM (scanning electron microscope) image of the silver nanowires, a number of folds per unit length of the wires of 20.0 per mm or less, obtained by measuring all the silver nanowires observed in a view field over a total wire length of 1.0 mm or more.

[8] The method for producing a silver nanowire ink according to the item [7], wherein the organic protective agent is PVP (polyvinylpyrrolidone) or a copolymer of vinylpyrrolidone and another monomer.

[9] The method for producing a silver nanowire ink according to the item [7], wherein the organic protective agent is a copolymer of vinylpyrrolidone and a diallyldimethylammonium salt monomer.

[10] The method for producing a silver nanowire ink according to any one of the items [7] to [9], wherein the silver nanowire ink intermediate product further contains a binder component.

In the description herein, the mean length, the mean diameter, and the mean aspect ratio of the silver nanowires are in accordance with the following definitions.

[Mean Length $L_M$]

On an observation image by a field emission scanning electron microscope (FE-SEM), the trace length from one end to the other end of one silver nanowire is designated as the length of the wire. The value obtained by averaging the lengths of the silver nanowires present on the micrograph is designated as the mean length $L_M$. For calculating the mean length, the total number of the wires to be measured is 100 or more.

[Mean Diameter $D_M$]

On a bright field observation image by a transmission electron microscope (TEM), the distance between the contours on both sides in the thickness direction of one silver nanowire is designated as the diameter of the wire. The wires each can be assumed to have the substantially uniform thickness over the entire length thereof. Therefore, the thickness can be measured by selecting the portion that does not overlap the other wires. The operation, in which in the TEM image of one view field, all the wires except for the wires that is difficult to measure the diameter thereof due to the complete overlap with the other wires each are measured for the diameter, is performed for plural view fields randomly selected, so as to obtain the diameters of 100 or more different silver nanowires, and a mean value of the diameters of the silver nanowires is calculated and designated as the mean diameter $D_M$.

[Mean Aspect Ratio]

The mean aspect ratio $A_M$ is calculated by substituting the mean diameter $D_M$ and the mean length $L_M$ into the following expression (2), provided that both $D_M$ and $L_M$ substituted into the expression (2) are values in terms of nm.

$$A_M = L_M / D_M \qquad\qquad (2)$$

Advantageous Effects of Invention

According to the invention, a silver nanowire ink that has a small number of coarse foreign particles and contains silver nanowires having a sound thin and long form can be achieved even though the attached amount of the organic protective agent on the surface of the silver nanowires is decreased. A transparent conductive film excellent in appearance can be formed due to the small number of coarse foreign particles. Furthermore, the contact resistance at the contact parts of the wires in the transparent conductive coated film is decreased due to the decreased attached amount of the organic protective agent, and thereby a target conductivity can be obtained with a smaller amount of the wires mixed than a transparent conductive film using silver nanowires having the same dimension and shape. The decreased amount of the silver nanowires mixed is advantageous for the improvement of the visibility (i.e., the decrease of the haze) .

Brief Description of Drawings

Fig. 1 is an SEM image showing folds of silver nanowires.
Fig. 2 is an illustration schematically showing a conduit structure used for crossflow circulation washing.
Fig. 3 is the TG-DTA curve of the silver nanowires used for the ink formation in Comparative Example 1.
Fig. 4 is the TG-DTA curve of the silver nanowires used for the ink formation in Comparative Example 7.
Fig. 5 is the TG-DTA curve of the silver nanowires used for the ink formation in Comparative Example 8.
Fig. 6 is the SEM image of the silver nanowires collected from the coating ink produced in Example 1.
Fig. 7 is the SEM image of the silver nanowires collected from the coating ink produced in Comparative Example 2.
Fig. 8 is the SEM image of the silver nanowires collected from the coating ink produced in Comparative Example 3.
Fig. 9 is the SEM image of the silver nanowires collected from the coating ink produced in Comparative Example 4.
Fig. 10 is the SEM image of the silver nanowires collected from the coating ink produced in Comparative Example 5.

Description of Embodiments

[Dimension and Shape of Silver Nanowires]

The silver nanowires preferably have a shape that is thin and long as much as possible from the standpoint of the formation of a transparent conductive film excellent in conductivity and visibility. Specifically, it is desired that the mean diameter is 50 nm or less, and the mean aspect ratio is 300 or more. The mean diameter is more preferably less than 40 nm, and further preferably less than 30 nm. The mean aspect ratio is more preferably 400 or more. The mean length is preferably 10 $\mu$m or more.

[Number of Folds of Wire]

A wire having folds substantially exhibits only a function of a short wire from the standpoint of the conductivity due to the less contact opportunities thereof to remote wires within the conductive film even though the wire length thereof defined by the trace length is long. Therefore, the invention uses the fewness of the folds of the wire as a requirement for identifying the wire form. Specifically, on an SEM (scanning electron microscope) image of the silver nanowires, it is required that the number of folds per unit length of the wires is 20.0 per mm or less, obtained by measuring all the silver nanowires observed in the view field over a total wire length of 1.0 mm or more. In the case where the frequency of the folds of the wires is suppressed to this extent, the adverse effect thereby on the decrease of the conductivity may substantially not be elicited. The "fold" herein means a site where the wire locally inflects through plastic deformation. The number of folds per unit length of the wires is obtained in the following manner.

(Method for obtaining Number of Folds per Unit Length of Wires)

In one or plural view fields randomly selected from the observation of the silver nanowires sampled from the silver nanowire ink with an SEM, the total length and the number of folds of all the wires observed in each of the view fields are measured. At this time, as for a wire, a part of the entire length of which protrudes outside the view field, only the portion thereof that is observed inside the view field is used for the measurement. The wire total length $L_{TOTAL}$ (mm) and the total number $N_{TOTAL}$ of the folds are measured in all the view fields observed, and a value obtained by dividing $N_{TOTAL}$ by $L_{TOTAL}$ is designated as the number of folds per unit length of the wires (per mm). The number of view fields is set to make $L_{TOTAL}$ of 1.0 mm or more.

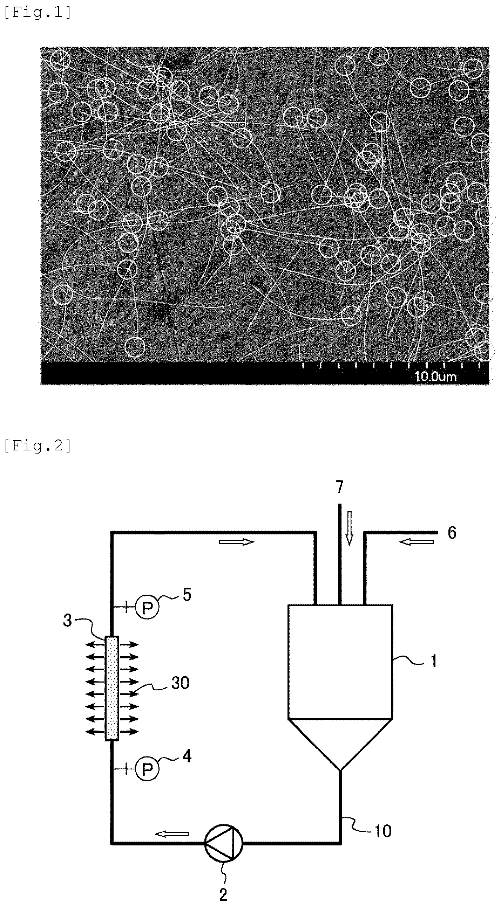

Fig. 1 exemplifies an SEM image where a large amount of silver nanowires having folds is observed. The wires are sampled from a silver nanowire ink produced on trial. In the image, the folds of the wires are shown with circles. The wires in the observation view field of the SEM image have a wire total length of 0.652 mm and a number of folds observed in the view field of 73. Since the total length of the wires only in this view field does not reach 1.0 mm, other one view field is observed in the same manner. As a result, the wire total length $L_{TOTAL}$ is 1.342 mm, and the total number $N_{TOTAL}$ of the folds is 150, from which the number of folds per unit length of the wires collected from the ink is calculated as $151/1.342 \approx 112.5$ per mm.

[Number of Particles by Particle Counter]

In a silver nanowire ink having a controlled components by adding a thickening substance or the like to a silver nanowire dispersion liquid, a part of the thickening substance may not be completely dissolved and drifts as gelled particles in the liquid. Since silver nanowires tend to be aggregated onto the gelled particle, the presence of the gelled particles becomes a factor forming coarse foreign particles. In the process of the ink formation, wire aggregates may also be formed in some cases in the other parts than the gelled particles in the solution. Furthermore, the aggregated particles of the wires having originally existed in the silver nanowire dispersion liquid may remain as foreign particles in the ink. These foreign particles tend to form in a higher frequency in the case where the attached amount of the organic protective agent attached to the surface of the silver nanowires is small. In the invention, since the silver nanowires having an attached amount of the organic protective agent that is controlled to small are used, the amount of the coarse foreign particles tends to be large in the stage of the intermediate product after completing the ink formation, as compared to the ordinary silver nanowire inks. Accordingly, it is necessary to restrict the amount of the coarse foreign particle existing in the silver nanowire ink. As a result of the various investigations, it has been found that particles having a particle diameter exceeding 7 $\mu$m measured with a liquid borne light extinction particle counter may be recognized as dot-like foreign matters by the naked eye in the transparent conductive film, and a favorable appearance in the purpose of most of touch-sensitive panels can be obtained by suppressing the existing amount of the particles exceeding 7 $\mu$m to 50 per mL or less per unit volume of the ink. Accordingly, in the silver nanowire ink according to the invention, it is required that the existing amount of particles having a particle diameter exceeding 7 $\mu$m is 50 per mL or less per unit volume of the ink, measured with a liquid borne light extinction particle counter. From the standpoint of the stable achievement of a touch-sensitive panel with higher quality, the existing amount of particles having a particle diameter exceeding 7 $\mu$m is more preferably 40 per mL or less per unit volume of the ink. The ink having a small number of particles can be achieved with an ink using silver nanowires having a small attached amount of an organic protective agent, by applying the thin film revolution method described later after the ink formation.

[Conductivity of Conductive Film]

The silver nanowire ink according to the invention has an effect of improving the conductivity of the transparent conductor formed therewith as one of the features thereof. Specifically, the silver nanowire ink has such a property that in a conductive film obtained by forming a coated film having a mean silver concertation $C_{Ag}$ per unit projected area viewed in the thickness direction of $15 \pm 2$ mg/cm$^2$, with the silver nanowire ink as a coating liquid, followed by drying, on a PET (polyethylene terephthalate) substrate, the conductive film has a relationship between the sheet resistance R ($\Omega$/sq.) of the conductive film and the $C_{Ag}$ (mg/cm$^2$) that satisfies the following expression (1).

$$R \leq -8C_{Ag} + 215 \qquad (1)$$

In general, with the increase of the mean silver concertation $C_{Ag}$ of a transparent conductive film, the sheet resistance thereof is decreased, and the extent of the decrease tends to decrease gradually with the increase of the $C_{Ag}$. However, it has been found that as for the transparent conductive coated films produced with the same coating liquid, the relationship between the sheet resistance R and the mean silver concertation $C_{Ag}$ becomes a substantially linear relationship in a certain range in the case where the mean silver concertation $C_{Ag}$ is as relatively low as $15\pm2$ mg/cm$^2$. According to the further investigations based thereon, it has been confirmed that the conductivity imparting capability of an ink (coating liquid) can be evaluated by the expression (1). The excellent conductivity satisfying the expression (1) can be achieved by using silver nanowires that satisfy the condition that the attached amount of the organic protective agent is controlled small, in addition to the condition relating to the dimension and shape of the wires, i.e., the addition of thin and long silver nanowires. Specifically, the attached amount of the organic protective agent is preferably decreased to 8.0% by mass or less based on the total amount of the organic protective agent and silver. The silver nanowire ink more preferably has such a property that satisfies the following expression (1)', instead of the expression (1).

$$R \leq -8C_{Ag} + 210 \qquad\qquad (1)'$$

[Organic Protective Agent]

In the synthesis of silver nanowires by the alcohol solvent reduction method, reduction reaction is performed in the presence of an organic protective agent. The organic protective agent existing in the solvent immediately covers the surface of silver deposited, and exhibits a function suppressing the deposited product of metallic silver from coarsely growing. The deposited shape in the form of nanowires can be obtained through the function. The organic protective agent attached to the surface of the silver nanowires thus synthesized has a function securing the dispersibility of the wires in the liquid and preventing oxidation of silver. A treatment of replacing the organic protective agent on the surface of the silver nanowires by an organic protective agent of another kind can also be performed.

In the case where the silver nanowires having the organic protective agent used in the synthesis thereof attached thereto are applied to a silver nanowire ink, the organic protective agent that appropriately has both the property suitable for the synthesis and the dispersibility in the liquid is selected. PVP (polyvinylpyrrolidone) has been well known as the organic protective agent of this kind, and various copolymers of vinylpyrrolidone and another monomer are being developed in recent years. Examples thereof include a cationic copolymer, such as a copolymer of vinylpyrrolidone and a diallyldimethylammonium salt monomer, a copolymer of vinylpyrrolidone and an acrylic or methacrylic monomer, and a copolymer of vinylpyrrolidone and a maleimide monomer. The polymerization composition of the copolymer is preferably formed of from 0.1 to 10% by mass of the monomer other than vinylpyrrolidone and the balance of vinylpyrrolidone.

The organic protective agent is preferably a polymer having a weight average molecular weight of from 30,000 to 3,000,000. In the case where the weight average molecular weight of the organic protective agent is too small, particulate metallic silver tends to form in the alcohol solvent reduction method, which decreases the yield of the silver nanowires. In the case where the weight average molecular weight is too large, on the other hand, the resulting silver nanowires tend to have an increased diameter, which makes difficult the synthesis of thin wires suitable for a transparent conductive film.

[Liquid Medium of Ink]

The solvent for constituting the liquid medium of the ink is preferably a water solvent or a mixed solvent of water and an alcohol. The alcohol used in the solvent is preferably an alcohol having a polarity with a solubility parameter (SP value) of 10 or more. For example, a low boiling point alcohol, such as methanol, ethanol, and 2-propanol (isopropyl alcohol), is preferably used. The SP values thereof are said to be 23.4 for water, 14.5 for methanol, 12.7 for ethanol, and 11.5 for 2-propanol. The SP values referred herein are values defined by the regular solution theory introduced by Hildebrand. In the case where a mixed solvent of water and an alcohol is applied, the ink preferably has an alcohol content occupied in the ink that is controlled to a range of from 1.0 to 25.0% by mass.

[Thickening Substance]

The silver nanowire ink used for coating a transparent conductive film preferably has a viscosity that is appropriately controlled by adding a thickening substance. The viscosity thereof at 25°C may be, for example, in a range of from 1 to 40 mPa·s. The viscosity value employed may be a value at a shear velocity of 604.2 (1/s). Examples of the thickening substance suitable for controlling the viscosity include a water soluble cellulose ether, such as HPMC (hydroxypropyl methyl cellulose) and HEMC (hydroxyethyl methyl cellulose). The weight average molecular weight of HPMC used may be, for example, in a range of from 100,000 to 1,200,000, and the weight average molecular weight of HEMC used may be, for example, in a range of from 100,000 to 1,200,000. The weight average molecular weight herein may be confirmed, for example, by the GPC-MALS method. The thickening substance may be used as a combination of two or more kinds thereof. In the case where one kind or two kinds of HPMC and HEMC are used, the total content of HPMC and HEMC in the ink may be, for example, from 0.01 to 1.0% by mass, including those remaining as the gelled particles.

[Binder Component]

The silver nanowire ink may contain a binder component depending on necessity. As a material that functions as the binder without impairing the dispersibility of the nanowires and is excellent in conductivity, light transmittance, and adhesiveness, for example, at least one of a water soluble acrylic-urethane copolymer resin and a water soluble urethane resin may be contained. The total content of the water soluble acrylic-urethane copolymer resin and the water soluble urethane resin in the ink (which is the mass proportion based on the total mass of the ink including the silver nanowires) is preferably controlled to a range of from 0.05 to 2.0% by mass.

Examples of the binder containing the water soluble acrylic-urethane copolymer resin as a component include "UC90", produced by Alberdingk Boley, Inc., "Adeka Bontighter HUX-401", produced by Adeka Corporation, and "NeoPac™ E-125", produced by DSM Coating Resins, LLC.

The binder containing the water-soluble urethane resin applied is preferably a urethane resin colloid or a urethane resin dispersion. Examples thereof include Superflex 130, Superflex 150HS, Superflex 170, Superflex 210, Superflex 300, Superflex 500M, Superflex 420, Superflex 820, Superflex E-2000, and Superflex R-5002, all produced by DSK Co., Ltd., Hydran AP-30, Hydran WLS-213, Vondic 1980NE, Hydran WLS-602, and Hydran WLS-615, all produced by DIC Corporation, Adeka Bontighter HUX-561S, Adeka Bontighter HUX-350, Adeka Bontighter HUX-282, Adeka Bontighter HUX-830, Adeka Bontighter HUX-895, and Adeka Bontighter HUX-370, all produced by Adeka Corporation, NeoPac™ R-600, NeoPac™ R-650, NeoPac™ R-967, NeoPac™ R-9621, and NeoPac™ R-9330, all produced by DSM Coating Resins, LLC, Resamine D-4090, Resamine D-6065NP, Resamine D-6335NP, and Resamine D-9087, all produced by Dainichiseika Color & Chemicals Mfg. Co., Ltd., Tafigel PUR80, Tafigel PUR41, and Tafigel PUR61, all produced by Munzing Chemie GmbH, and Neostecker 400, Neostecker 1200, Evafanol HA-50C, Evafanol HA-170, Evafanol AP-12, and Evafanol APC-55, all produced by Nicca Chemical Co., Ltd.

[Silver Content in Ink]

The content of the silver nanowires in the ink is preferably controlled to a range of from 0.01 to 5.0% by mass in terms of mass proportion of metallic silver occupied in the total mass of the ink.

[Method for producing Silver Nanowire Ink]

A method for producing the silver nanowire ink will be exemplified.

(Synthesis of Silver Nanowires)

The silver nanowires can be synthesized, for example, by the known alcohol solvent reduction method (for example, the method described in JP-A-2015-180772). The reaction liquid after the synthesis (slurry) is subjected to solid-liquid separation by such a method as decantation, and then sufficiently washed to provide silver nanowires to be subjected to the following process. Silver nanowires or a dispersion liquid thereof available as industrial products may be procured and used.

(Pretreatment)

Preceding the decrease of the attached amount of the organic protective agent in the crossflow circulation washing step described later, the silver nanowires are preferably subjected to a treatment of dispersing the silver nanowires in a polar solvent (such as a water solvent) having dissolved therein one or more kinds of a polymer selected from PVP (polyvinylpyrrolidone) and a copolymer of vinylpyrrolidone and another monomer. Specific examples of the copolymer of vinylpyrrolidone and another monomer include a copolymer of vinylpyrrolidone and a diallyldimethylammonium salt monomer, a copolymer of vinylpyrrolidone and an acrylic or methacrylic monomer, and a copolymer of vinylpyrrolidone and a maleimide monomer. These are polymers that can be originally used as the organic protective agent. A polymer of the same kind as the organic protective agent having been attached to the silver nanowires may also be used.

The detachment of the organic protective agent is gradually performed in the crossflow circulation washing, by performing the dispersion treatment as the pretreatment. Specifically, the organic protective agent on the surface of the silver nanowires can be prevented from being washed and removed rapidly, so as to facilitate the control of the amount thereof attached. In the case where a water solvent is used as the liquid medium for the dispersion treatment, the amount of the polymer dissolved in the solvent may be from 0.01 to 2.0% by mass based on the total amount of water and the polymer. The pretreatment is not essential, but is effective in the case where the circulation is elaborately performed for providing wires having a large mean length in the process of the crossflow circulation washing or in the case where the control of the amount of the organic protective agent attached is performed precisely.

(Crossflow Circulation Washing)

The silver nanowires having attached thereto the organic protective agent are circulated along with a flowing liquid medium in a circulation flow channel having a crossflow filter in the middle thereof. At this time, the crossflow filtration is performed with the filter while replenishing the liquid medium to the circulation flow channel continuously or intermittently. According to the procedure, the surface of the silver nanowires is washed with the liquid medium, and a part of the polymer of the organic protective agent adsorbed on the surface of metallic silver is detached. The attached amount of the organic protective agent attached to the surface of the silver nanowires can be controlled to a prescribed range based on the "relationship between the circulation time and the attached amount" having been comprehended in advance by a preliminary experiment or the like corresponding to the circulation condition. The optimization of the length distribution of the wires (purification) is also performed by the crossflow filtration. The "circulation" herein means repetition of the process, in which a material goes around and returns to the original position (for example, the tank as the starting point) without being discharged outside the system through the crossflow filter. Accordingly, in addition to the case where the crossflow filtration is continuously performed with an equipment having a circulation channel constituted by a tubular channel, a batch type process may also performed repeatedly, in which the liquid after the crossflow filtration (containing the silver nanowires) is once recovered with a vessel separate from the start vessel, and then the recovered product is transported by a worker to return to the original start vessel and again subjected to the crossflow filtration after adding a fresh liquid medium thereto.

A porous ceramic tube is preferably used as the crossflow filter. The procedure itself of the crossflow filtration using a porous ceramic tube is described in JP-A-2016-55283 in detail, and the procedure may be utilized herein. However, the amount of the organic protective agent attached to the surface of the silver nanowires is controlled by the crossflow filtration to a range of 1.5% by mass or more and 8.0% by mass or less, more preferably to a range of 3.0% by mass or more and 8.0% by mass or less, and further preferably to a range of 4.0% by mass or more and 8.0% by mass or less. The form (dimension and shape) of the silver nanowires is controlled to the following form (A) through the crossflow filtration:

(A) a silver nanowire form having a mean diameter of 50 nm or less, and a mean aspect ratio shown by a ratio of a mean length (nm) and a mean diameter (nm) of 350 or more.

By the use of silver nanowires that are synthesized by the alcohol solvent reduction method capable of synthesizing thin and long silver nanowires (such as the method described in JP-A-2015-180772), the crossflow condition capable of providing silver nanowires having the form (A) can be found within the condition range capable of providing the aforementioned attached amount of the organic protective agent.

The organic protective agent attached to the surface of the silver nanowires becomes a factor inhibiting the conduction at the intersection points of the silver nanowires in the transparent conductive film. According to the investigations by the inventors, in the case where the silver nanowires have a mean diameter of 50 nm or less and a mean aspect ratio of 300 or more, the effect of enhancing the conduction between the wires is conspicuously exhibited in the transparent conductor by using silver nanowires having an attached amount of the organic protective agent that is decreased to 8.0% by mass or less based on the total amount of the organic protective agent and silver. In the transparent conductive film having mixed therein the silver nanowires having the high conductivity enhancing effect, the amount of the wires necessary for providing a certain conductivity (sheet resistance) can be decreased. Consequently, in the comparison assuming the same sheet resistance, the visibility (particularly the haze characteristics) of the transparent conductive film is conspicuously improved. In the case where the attached amount of the organic protective agent becomes too small, on the other hand, the dispersibility in a liquid is lowered, and for example, sedimentation and aggregation of the silver nanowires in the ink may occur in the early stage. Furthermore, coarse foreign particles tend to form through aggregation of the wires. As a result of the various investigations, it is preferred that the attached amount of the organic protective agent is secured to approximately 1.5% by mass. Therefore, the attached amount of the organic protective agent herein is defined to a range of from 1.5% by mass or more and 8.0% by mass or less based on the total amount of the organic protective agent and silver. The amount thereof is more preferably managed to a range of 3.0% by mass or more and 8.0% by mass or less. The amount of the organic protective agent attached can be measured in such a manner that the silver nanowires collected from the silver nanowire dispersion liquid are dried and subjected to the TG-DTA measurement.

The pretreatment performed is effective for preventing the excessive detachment of the organic protective agent, and as another effective measure, a method is exemplified herein, in which one or more kinds of a polymer selected from PVP (polyvinylpyrrolidone) and a copolymer of vinylpyrrolidone and another monomer is dissolved in the liquid medium to be circulated in the crossflow circulation washing. Examples of the liquid medium used in the crossflow circulation washing include water, methanol, ethanol, 1-propanol, 2-propanol, 1-butanol, and mixed solvents thereof, and the use of a water solvent is industrially appropriate. Examples of the copolymer of vinylpyrrolidone and another monomer include a copolymer of vinylpyrrolidone and a diallyldimethylammonium salt monomer, a copolymer of vinylpyrrolidone and an acrylic or methacrylic monomer, and a copolymer of vinylpyrrolidone and a maleimide monomer, as similar to the pretreatment. These are polymers that can be originally used as the organic protective agent. A polymer of the same kind as the organic protective agent having been attached to the silver nanowires may also be used.

It suffices that the polymer is dissolved in the initial liquid medium and the liquid medium to be replenished. In the case where a water solvent is used as the liquid medium, the concentration of the polymer dissolved therein may be, for example, from 10 to 5,000 ppm (from 0.001 to 0.500% by mass) based on the total amount of water and the polymer. The function moderating the detachment of the organic protective agent during the circulation flowing can also be obtained by this method, as similar to the case using the silver nanowires having been subjected to the pretreatment. As similar to the pretreatment, this method is not essential, but is effective in the case where the circulation is elaborately performed for providing wires having a large mean length or in the case where the control of the amount of the organic protective agent attached is performed precisely. It is more effective to use both the pretreatment and this method of adding the polymer to the circulation liquid.

The circulation condition may vary depending on the scale of the equipment and the filtration characteristics of the porous filter, and for example, the initial concentration of the silver nanowires in the circulation flow channel may be controlled to a range of from 0.005 to 3.0% by mass based on the initial total amount of the liquid medium and the silver nanowires. Assuming that the average flow rate of the liquid introduced to the tubular filter is represented by $Q_0$ (L/min), and the average flow rate of the liquid discharged outside through the tubular filter (i.e., the filtrate) is represented by $Q_1$ (L/min), the ratio $Q_1/Q_0$ is preferably controlled to a range of from 0.00001 to 0.1. The average flow rate herein is a value obtained by dividing the total flow amount by the filtration time. The difference between $Q_0$ and $Q_1$ corresponds to the average flow amount of the liquid proceeding to the tubular channel on the downstream side of the filter. The flow speed inside the tubular crossflow filter may be set, for example, to a range of from 0.1 to 100 m/s (i.e., from 100 mm/s to 100,000 m/s), and is preferably set to a range of from 0.1 to 10 m/s (i.e., from 100 mm/s to 10,000 mm/s), at the inlet end of the tubular filter. In the case where the liquid is treated by dividing into the multiple tubular filter disposed in parallel, assuming that the average flow rate of the total amount of the liquid introduced to the bundle of the tubular filter disposed in parallel is represented by $Q_0$ (L/min), and the average flow rate of the total amount of the liquid discharged outside from the bundle of the tubular filter (i.e., the filtrate) is represented by $Q_1$ (L/min), the ratio $Q_1/Q_0$ is preferably controlled to the aforementioned range, and the flow speed is preferably controlled to the aforementioned range at the inlet ends of the respective tubular filters. The total amount of the liquid medium replenished during the circulation may be set, for example, to from 0.5 to 20 times, and more preferably from 1 to 10 times, based on the initial total mass of the liquid medium and the silver nanowires. The circulation time (which is the total time of the crossflow filtration performed in the case where the batch type process is performed) may be set, for example, to a range of from 1 to 500 hours.

(Crossflow Concentrating)

The silver nanowires having the attached amount of the organic protective agent thereto that has been decreased to the prescribed range by the crossflow circulation washing are subjected depending on necessity to a treatment for increasing the concentration of the wire in the liquid (concentrating). The treatment of concentrating may be performed efficiently, for example, by "crossflow concentrating" utilizing the equipment of the crossflow circulation washing after the crossflow circulation washing. The crossflow concentrating can be performed in such a manner that the circulation of the crossflow filtration is performed for a certain period of time in a state where the liquid medium is not replenished, or the amount of the liquid replenished is smaller than the amount of the filtrate discharged from the crossflow filter.

According to the procedures, the silver nanowire dispersion liquid having the silver nanowires having the attached amount of the organic protective agent and the dimension and shape that are controlled to the aforementioned appropriate ranges, dispersed in the liquid medium can be obtained.

The attached amount of the organic protective agent can be measured by performing a TG-DTA measurement for a dried specimen of the silver nanowires obtained by drying and removing the liquid medium. Specifically, the silver nanowires are heated in the air atmosphere from ordinary temperature to a temperature exceeding 600°C at a temperature increasing rate of 10°C/min, and the weight change of from 150°C to 600°C is designated as the amount of the organic protective agent attached to the silver nanowires. The components of the liquid medium which remain in the dried sample of the silver nanowires (specifically water and an alcohol having from 1 to 4 carbon atoms) are evaporated and removed in the process of heating to 150°C at the temperature increasing rate, and the components of the organic protective agent are removed from the surface of the nanowires during heating from 150°C to 600°C.

(Ink Formation)

The thickening substance is added to the silver nanowire dispersion liquid obtained through the process of the crossflow filtration, so as to form an ink. The binder component may also be added depending on necessity. The silver nanowire ink intermediate product to be subjected to the dispersion treatment is obtained in this manner.

(Dispersion Treatment)

The silver nanowire ink intermediate product is subjected to a dispersion treatment by a thin film revolution method. According to the procedure, the silver nanowires in the ink are controlled to have the following form (B), and simultaneously the ink is controlled to have such an ink property that the existing amount of particles having a particle diameter exceeding 7 $\mu$m is 50 per mL or less per unit volume of the ink, measured with a liquid borne light extinction particle counter:
(B) a silver nanowire form having a mean aspect ratio shown by a ratio of a mean length (nm) and a mean diameter (nm) of 300 or more, and on an SEM (scanning electron microscope) image of the silver nanowires, a number of folds per unit length of the wires of 20.0 per mm or less, obtained by measuring all the silver nanowires observed in a view field over a total wire length of 1.0 mm or more.

[Production of Transparent Conductive Film]

The silver nanowire ink subjected to the dispersion treatment is used as a coating liquid, and is coated on a transparent substrate, such as a PET film, PC, or glass, by a bar coater method, a die coater method, or the like, and dried by removing the liquid component through vaporization or the like, so as to provide a transparent conductive film. A transparent conductive circuit can be obtained by pattering the transparent conductive film by such a method as laser etching or a combination of a resist and wet development.

Examples

As the organic protective agent, the following materials were prepared.

(Copolymer A)

Copolymer of vinylpyrrolidone and diallyldimethylammonium nitrate
Polymerization ratio: vinylpyrrolidone: 99% by mass, diallyldimethylammonium nitrate: 1% by mass, weight average molecular weight: 75,000

(Copolymer B)

Copolymer of vinylpyrrolidone and ethylmaleimide (polymerization composition: vinylpyrrolidone: 99.25% by mass, ethylmaleimide: 0.75% by mass, weight average molecular weight: 80,000)

(Copolymer C)

Copolymer of vinylpyrrolidone and acetamide (polymerization composition: vinylpyrrolidone: 99.25% by mass, acetamide: 0.75% by mass, weight average molecular weight: 75,000)

(PVP)

Commercially available PVP (polyvinylpyrrolidone)
Weight average molecular weight: 55,000

<Comparative Example 1>

The copolymer A was used as the organic protective agent. At ordinary temperature, 4.84 g of a propylene glycol solution having a lithium chloride content of 10% by mass, 0.1037 g of potassium bromide, 0.426 g of lithium hydroxide, 4.994 g of a propylene glycol solution having an aluminum nitrate nonahydrate content of 20% by mass, and 83.875 g of powder of the polymer A as the organic protective agent were dissolved in 8,116.3 g of propylene glycol to form a solution A. In a separate vessel, 67.96 g of silver nitrate was added to a mixed solution of 95.70 g of propylene glycol and 8.00 g of pure water, and dissolved by stirring at 35°C, so as to provide a solution B containing silver. The solution A was placed in a reaction vessel, and heated from ordinary temperature to 90°C under stirring at a rotation number of 175 rpm, and then the total amount of the solution B was added to the solution A through two addition ports over 1 minute. After completing the addition of the solution B, the reaction liquid was continuously stirred at 90°C for 24 hours. Thereafter, the reaction liquid was cooled to ordinary temperature to synthesize silver nanowires.

(Washing)

Acetone was added to the reaction liquid cooled to ordinary temperature in an amount of 20 times the reaction liquid, followed by stirring for 15 minutes. The mixture was then allowed to stand for 24 hours. After standing, a concentrate and a supernatant were observed, and the supernatant was removed to recover the concentrate. 1,280 g of pure water was added to the concentrate, and after stirring for 12 hours, acetone was added thereto in an amount of 20 times the total mass of the concentrate and 1,280 g of pure water, followed by stirring for 10 minutes and then allowing to stand for 24 hours. After standing, a concentrate and a supernatant were observed, and the supernatant was removed to recover the concentrate. The operations of the dispersion in pure water, the addition of acetone, the standing, and the removal of the supernatant were repeated twice to provide a concentrate. The concentrate is referred to as a "concentrate after washing".

(Pretreatment)

As the pretreatment for performing crossflow circulation washing, a redispersion treatment was performed by using a water solvent containing pure water having dissolved therein PVP (polyvinylpyrrolidone) having a weight average molecular weight of 55,000. Specifically, a water solvent having a concentration of the aforementioned PVP of 0.5% by mass was prepared, and the water solvent and the concentrate after washing were mixed to provide a silver nanowire dispersion liquid having a metallic silver concentration (i.e., the concentration of silver including silver nanowires and silver nanoparticles as an impurity in the liquid) of 0.8% by mass.
The resulting silver nanowire dispersion liquid was diluted with pure water to make a silver concentration of 0.08% by mass, so as to provide approximately 52 kg of a silver nanowire dispersion liquid. The dispersion liquid is referred to as a "crossflow original liquid".

(Crossflow Circulation Washing)

The crossflow original liquid subjected to the pretreatment was placed in a tank of an equipment having a tubular channel structure shown in Fig. 2, and subjected to crossflow filtration by a method of circulating continuously in the tubular channel. In this example, however, nine tubular filters were disposed in parallel at the position shown by numeral 3 in Fig. 2, and the liquid was divided into the tubular filters and treated therewith. The crossflow filter used was a tubular filter having a tube wall formed of porous ceramics, and a dimension of 500 mm in length, 12 mm in outer diameter, and 9 mm in inner diameter. The material of the ceramics was SiC (silicon carbide) and had an average pore diameter of 5.9 $\mu$m measured by the mercury intrusion method using a mercury porosimeter, produced by Micromeritics Instrument Corporation.
The detailed conditions for the measurement of the pore distribution by the mercury intrusion method were as follows.
Measurement equipment: Autopore IV 9510
Measurement range: 440 to 0.003 $\mu$m in diameter
Contact angle of mercury: 130°
Surface tension of mercury: 485 dynes/cm
Pretreatment: 300°C $\times$ 1 hour (in the air)
Mass of measurement specimen: 3.5 g
For sufficiently ensuring the measurement accuracy, the measurement data were obtained for 80 points in the measurement range of from 1 to 100 $\mu$m. The average pore diameter referred herein is a median diameter.
The liquid medium to be circulated had an initial PVP concentration (i.e., a mass proportion of PVP in the water solvent constituting the crossflow original liquid) of 250 ppm. The circulation was performed while replenishing a fresh liquid medium to the tank. Nine of the aforementioned tubular filters were disposed in parallel on the circulation flow channel. The circulation was performed with a flow rate of the liquid introduced to one of the tubular filters of 13 L/min. The flow speed of the liquid introduced to each of the tubular filters was 3,495 mm/s. The pressure in the tubular channel at the inlet end of the tubular filter (i.e., the pressure measured with the upstream side pressure gauge 4 in Fig. 2) was 0.025 MPa. The liquid medium to be replenished was a PVP aqueous solution having a PVP concentration (i.e., a mass proportion of PVP in the water solvent) of 50 ppm. The tank used was a jacketed tank, and cooling water was flown in the jacket to suppress increase of the liquid temperature during the circulation. Pure water to be replenished was cooled pure water at a temperature of from 10 to 15°C. As a result, the temperature of the liquid during the circulation was in a range of from 20 to 30°C. The crossflow circulation washing was performed in this manner for 5 hours.

(Crossflow Concentrating)

Subsequent to the crossflow circulation washing for 5 hours, the circulation by the crossflow filtration was performed in a state where the replenishment of the liquid medium was terminated, and thus the silver nanowire dispersion liquid was concentrated by utilizing the phenomenon that the liquid amount was decreased through the discharge of the filtrate. The circulation was performed for approximately 5 hours, so as to provide a silver nanowire dispersion liquid having the silver nanowires dispersed in the water solvent in an amount of 0.4% by mass in terms of metallic silver concentration.

(Measurement of Mean Length and Mean Diameter of Silver Nanowires before Ink Formation)

The concentrate after completing the washing was dispersed in pure water, and the dispersion liquid was collected on an observation table of SEM, and after evaporating water on the observation table, was observed with a field emission scanning electron microscope (S-4700, produced by Hitachi High-Tech Corporation) at an acceleration voltage of 3 kV and a magnification of 1,500. In three or more view fields randomly selected, the wires capable of being confirmed for the entire length thereof in all the view fields as measurement objects were measured for the mean length according to the aforementioned definition with a software (DoctorCanvas). The mean diameter was measured in such a manner that the dispersion liquid was collected on an observation table of TEM and observed for bright field with a transmission electron microscope (JEM-1011, produced by JEOL, Ltd.) at an acceleration voltage of 100 kV and a magnification of 40,000 to provide an observation image, and after enlarging the original image twice for the accurate measurement of the diameter, the mean diameter was measured according to the aforementioned definition with a software (Motic Image Plus 2.1S). The mean aspect ratio was obtained by substituting the mean diameter and the mean length for the expression (1). The results are shown in Tables 1 and 2. As a result, the silver nanowires had a mean length of 16.7 $\mu$m, a mean diameter of 26.5 nm, and a mean aspect ratio of $16,700/26.5 \approx 630$.

(Measurement of Attached Amount of Organic Protective Agent)

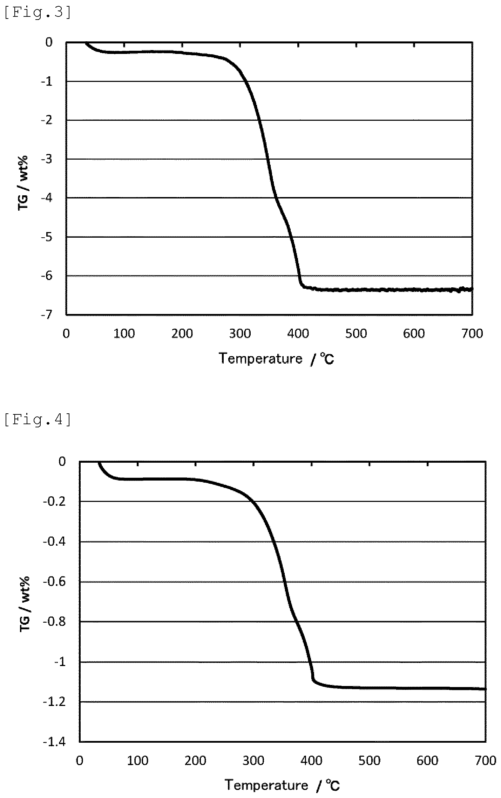

A dried product of the silver nanowires was obtained in such a manner that a liquid containing the silver nanowires in an amount corresponding to 20 mg of silver was collected from the silver nanowire dispersion liquid after concentrating, and after adding 5 g of pure water, subjected to centrifugal separation under the condition of 4,000 rpm for 30 minutes, and after removing the supernatant, the residue was dried at 120°C for 12 hours. 15 mg of a specimen of the dried product was subjected to a TG-DTA measurement in the air atmosphere with STA 7200, produced by Hitachi High-Tech Corporation. The temperature was increased at a rate of 10°C per minute, and the weight change of from 40°C to 700°C was measured. In the measurement, a platinum sample pan (5.2 mm in diameter, 5 mm in height) was used. Fig. 3 shows the TG-DTA curve. Assuming that the weight decrease at the time of 150°C was the amount Ws (% by mass) of the components of the liquid medium (specifically, water and alcohols having 1 to 4 carbon atoms) remaining in the dried specimen, and the weight change of from 150°C to 600°C was the amount Wp (% by mass) of the organic protective agent attached to the silver nanowires. The mass proportion P (% by mass) of the organic protective agent based on the total amount of the organic protective agent and silver was obtained by the expression (3).

$$P = 100 \times [Wp/(100-Ws)] \qquad (3)$$

wherein

P represents the mass proportion of the organic protective agent based on the total amount of the organic protective agent and silver (% by mass),
Wp represents the amount of the organic protective agent attached to the wires (% by mass), and
Ws represents the amount of the components of the liquid medium remaining in the dried specimen (% by mass).

As a result, the attached amount P of the organic protective agent of the silver nanowires obtained in this example was 6.1% by mass based on the total amount of the organic protective agent and silver.

(Ink Formation)

Pure water and 2-propanol (isopropyl alcohol) were added to the silver nanowire dispersion liquid having the silver nanowires dispersed in the water solvent obtained through the aforementioned crossflow concentrating, so as to provide a silver nanowire dispersion liquid having the silver nanowires dispersed in the water solvent having 2-propanol dissolved therein. An aqueous solution having HEMC (hydroxyethyl methyl cellulose) as a thickening substance dissolved therein and a urethane resin dispersion (Resamine D-4090, produced by Dainichiseika Color & Chemicals Mfg. Co., Ltd.) as a binder component were added to the silver nanowire dispersion liquid, so as to provide a silver nanowire ink. The HEMC had a weight average molecular weight of 910,000.

The ink composition was 10% by mass of 2-propanol, 0.133% by mass of HEMC, 0.066% by mass of the binder component, 0.100% by mass of the silver nanowires (silver and the organic protective agent), and the balance of water.

This ink after completing the ink formation is referred to as an "intermediate product ink".

In this example, the intermediate product ink was directly used as the "coating ink" without a dispersion treatment, and the following experiment was performed.

(Measurement of Viscosity of Coating Ink)

The viscosity of the coating ink was evaluated with a rheometer (HAAKE RheoStress 600, produced by Thermo Scientific, Inc.) with a cone having a diameter of 60 mm and an angle of 1°. The viscosity values were measured under the condition of a gap in measurement of 0.052 mm and a temperature of 25°C while changing the shear velocity to 1.511, 3.021, 6.042, 15.11, 30.21, 60.42, 120.8, 302.1, and 604.2 (1/s) to obtain the viscosity values after 20 seconds at each shear velocity. The value at a shear velocity of 604.2 (1/s) was used as the viscosity of the ink. The viscosity of the coating ink of this example was 6.7 mPa·s.

(Measurement of Number of Particles with Particle Counter)

The coating ink was collected and diluted with pure water to make a silver concentration of 0.001% by mass. The particle size distribution of the particles existing in the liquid was measured with a liquid borne light extinction particle counter (KS-42D, produced by Rion Co., Ltd.). As a result, the existing amount of the particles exceeding 7 $\mu$m was 494 per mL per unit volume of the ink.

(Measurement of Mean Length and Mean Diameter of Silver Nanowires in Coating Ink)

The mean length and the mean diameter of the silver nanowires in the coating ink were measured in the same manner as described in the section "Measurement of Mean Length and Mean Diameter of Silver Nanowires before Ink Formation" above. As a result, the silver nanowires had a mean length of 16.7 $\mu$m, a mean diameter of 26.5 nm, and a mean aspect ratio of $16,700/26.5 \approx 630$.

(Production of Transparent Conductive Film)

A PET film substrate having a thickness of 100 $\mu$m and a dimension of 100 mm × 150 mm (Cosmoshine (trade name) A4100, produced by Toyobo Co., Ltd.) was prepared. The silver nanowire ink was coated on the bare surface of the PET film substrate with a bar coater to form a coated film having a mean silver concertation $C_{Ag}$ per unit projected area viewed in the thickness direction of 15±2 mg/cm². The area of the coated film formed on the substrate was 80 mm × 120 mm. In this example, a bar coater with a bar size of No.7 was used. The coated film was dried in the air at 120°C for 1 minute to provide a transparent conductive film.

(Measurement of Sheet Resistance)

A rectangular specimen of 70 mm × 100 mm was collected from the center portion of the substrate having the transparent conductive film formed thereon, and the sheet resistance of the transparent conductive film formed on the substrate was measured with Loresta GP MCP-T610 with an ESP probe, produced by Mitsubishi Chemical Analytech Co., Ltd. (pin distance: 5 mm, pin tip diameter: 2 mm, spring pressure: 240 g per spring). At this time, the measurement position was the center portion of the specimen, and the built-in compensation coefficient arithmetic software of the measurement equipment was used. As a result of the measurement, the transparent conductive film had a sheet resistance R of 64.4 Ω/sq. The specimen that satisfied the following expression (1) was evaluated as A (good conductivity), the other was evaluated as B (poor conductivity), and the evaluation A was judged as passed.

$$R \leq - 8C_{Ag} + 215 \qquad\qquad (1)$$

(Evaluation of Appearance of Transparent Conductive Film)

The transparent conductive film obtained in the method described above was irradiated with light in the direction substantially in parallel to the film surface, and the entire surface of the transparent conductive film was visually observed to measure the number of foreign matters seemed dots. The light source used was an LED light of 200 lumen. In the case where the existing density of the foreign matters is 50 or less per the A4 size according to ISO 216 (210 × 297 mm), it can be judged that the appearance is good enough for the purpose of a touch-sensitive panel. Accordingly, a specimen having an existing density of foreign matters apparently recognized visually of 50 per $m^2$ or less was evaluated as A (good appearance), the other was evaluated as B (poor appearance), and the evaluation A was judged as passed.

The experiment conditions and the measurement results are shown in Tables 1 and 2 (which are the same as in the following examples).

<Comparative Example 2>

An intermediate product ink was produced under the same conditions as in Comparative Example 1. In this example, the intermediate product ink was subjected to the following dispersion treatment to provide a coating ink.

(Dispersion Treatment)

The dispersion treatment was performed by ultrasonic dispersion for 30 minutes with an ultrasonic cleaner (ASU-20M, produced by As One Corporation).
The silver nanowire ink after completing the dispersion treatment was used as a coating ink, and an experiment was performed under the same conditions as in Comparative Example 1. Furthermore, the number of folds per unit length of the silver nanowires was measured in the following manner (which was the same as in the following examples with the dispersion treatment performed).

(Measurement of Number of Folds per Unit Length of Silver Nanowires)

The number of folds per unit length of the silver nanowires in the coating ink (per mm) was obtained according to the section "Method for obtaining Number of Folds per Unit Length of Wires" above.

<Comparative Example 3>

An intermediate product ink was produced under the same conditions as in Comparative Example 1. In this example, the intermediate product ink was subjected to the following dispersion treatment to provide a coating ink.

(Dispersion Treatment)

A flow channel having a flow channel diameter of 1 mm and a length of 150 mm was produced with a 3D printer. The dispersion treatment by the water flow dispersion method was performed in such a manner that the intermediate product ink was placed in a pressurized tank and passed through the flow channel by pressurizing with nitrogen gas at a pressure of 0.3 MPa.
The silver nanowire ink after completing the dispersion treatment was used as a coating ink, and an experiment was performed under the same conditions as in Comparative Example 1.

<Comparative Example 4>

An experiment was performed under the same conditions as in Comparative Example 3 except that in the dispersion treatment, the number of pass in the dispersion treatment was changed to 20.

<Comparative Example 5>

An intermediate product ink was produced under the same conditions as in Comparative Example 1. In this example, the intermediate product ink was subjected to the following dispersion treatment to provide a coating ink.

(Dispersion Treatment)

The dispersion treatment was performed with a highspeed agitation disperser (Homomixer MARK II, produced by Primix Corporation). 700 mL of the ink was placed in a 1 L beaker and treated at a rotation number of 8,000 rpm for 1 hour.
The silver nanowire ink after completing the dispersion treatment was used as a coating ink, and an experiment was performed under the same conditions as in Comparative Example 1.

<Comparative Example 6>

An intermediate product ink was produced under the same conditions as in Comparative Example 1. In this example, the intermediate product ink was subjected to the following dispersion treatment to provide a coating ink.

(Dispersion Treatment)

The dispersion treatment was performed with a highspeed agitation disperser (Cleamix CLM-0.8S, produced by M Technique Co., Ltd.). 700 mL of the ink was placed in a 1 L beaker and treated at a rotation number of 15,000 rpm for 1 hour. At this time, the rotor used was R2, and the screen used was S1.5-24.
The silver nanowire ink after completing the dispersion treatment was used as a coating ink, and an experiment was performed under the same conditions as in Comparative Example 1.

<Example 1>

An intermediate product ink was produced under the same conditions as in Comparative Example 1. In this example, the intermediate product ink was subjected to the following dispersion treatment to provide a coating ink.

(Dispersion Treatment)

The dispersion treatment was performed by the thin film revolution method with Zero Mill ZM-L, produced by Asada Iron Works Co., Ltd. The mill peripheral speed was 16 m/s, and the liquid was fed at a flow rate of 300 mL/min with a tube pump. The number of pass was 1.
The silver nanowire ink after completing the dispersion treatment was used as a coating ink, and an experiment was performed under the same conditions as in Comparative Example 1.

<Example 2>

An experiment was performed under the same conditions as in Example 1 except that in the dispersion treatment, the number of pass was changed to 3.

<Example 3>

An experiment was performed under the same conditions as in Example 1 except that in the dispersion treatment, the mill peripheral speed was 24 m/s, and the flow rate was 932 mL/min.

<Example 4>

An intermediate product ink was produced under the same conditions as in Comparative Example 1. In this example, the intermediate product ink was subjected to the following dispersion treatment to provide a coating ink.

(Dispersion Treatment)

The dispersion treatment was performed by the thin film revolution method with a rotary medialess disperser-emulsifier, produced by Ashizawa Finetech, Ltd. At this time, the liquid amount was 7 L, and the mill peripheral speed was 30 m/s. The treatment was performed by the circulation method, and the treatment time was 15 minutes.

The silver nanowire ink after completing the dispersion treatment was used as a coating ink, and an experiment was performed under the same conditions as in Comparative Example 1.

<Example 5>

An experiment was performed under the same conditions as in Example 4 except that in the dispersion treatment, the mill peripheral speed was 40 m/s, and the treatment time was 1 minute.

<Example 6>

An experiment was performed under the same conditions as in Example 4 except that in the dispersion treatment, the mill peripheral speed was 40 m/s, and the treatment time was 3 minutes.

<Example 7>

An intermediate product ink was produced under the same conditions as in Comparative Example 1. In this example, the intermediate product ink was subjected to the following dispersion treatment to provide a coating ink.

(Dispersion Treatment)

The dispersion treatment was performed by the thin film revolution method with Filmix FM-125, produced by Primix Corporation. The mill peripheral speed was 40 m/s, and the liquid was fed at a flow rate of 2 L/min with a tube pump. The number of pass was 1.

The silver nanowire ink after completing the dispersion treatment was used as a coating ink, and an experiment was performed under the same conditions as in Comparative Example 1.

<Example 8>

An experiment was performed under the same conditions as in Example 4 except that the silver nanowires having an attached amount of the organic protective agent controlled small were used in the ink formation. In this case, the attached amount of the organic protective agent was further decreased by using pure water as the liquid medium to be replenished and prolonging the period of time of the crossflow circulation washing to 8 hours. As a result of the TG-DTA measurement, the silver nanowires had an attached amount of the organic protective agent of 4.8% by mass based on the total amount of the organic protective agent and silver.

<Example 9>

An experiment was performed under the same conditions as in Example 4 except that the silver nanowires having an attached amount of the organic protective agent controlled large were used in the ink formation. In this case, the attached amount of the organic protective agent was secured large by using a PVP aqueous solution having a PVP concentration (i.e., a mass proportion of PVP in the water solvent) of 100 ppm as the liquid medium to be replenished. As a result of the TG-DTA measurement, the silver nanowires had an attached amount of the organic protective agent of 7.5% by mass based on the total amount of the organic protective agent and silver.

<Example 10>

An experiment was performed under the same conditions as in Example 4 except that the silver concentration in the transparent conductive film was controlled small. In this case, the ink composition was 10% by mass of 2-propanol, 0.127% by mass of HEMC, 0.063% by mass of the binder component, 0.095% by mass of the silver nanowires (silver and the organic protective agent), and the balance of water. The mean silver concertation $C_{Ag}$ per unit projected area viewed in the thickness direction of the transparent conductive film was calculated as 13.1 mg/cm$^2$.

<Example 11>

An experiment was performed under the same conditions as in Example 4 except that the silver concentration in the transparent conductive film was controlled large. In this case, the ink composition was 10% by mass of 2-propanol, 0.140% by mass of HEMC, 0.070% by mass of the binder component, 0.105% by mass of the silver nanowires (silver and the organic protective agent), and the balance of water. The mean silver concertation $C_{Ag}$ per unit projected area viewed in the thickness direction of the transparent conductive film was calculated as 16.8 mg/cm$^2$.

<Example 12>

As the intermediate product ink, an ink containing no binder component was produced. The ink composition was 10% by mass of 2-propanol, 0.133% by mass of HEMC, 0.100% by mass of the silver nanowires (silver and the organic protective agent), and the balance of water. An experiment was performed under the same conditions as in Example 4 except that the ink composition of the intermediate product ink was changed to the above. The coating ink obtained in this example had a viscosity of 5.1 mPa·s.

<Example 13>

As the intermediate product ink, an ink containing HPMC (hydroxypropyl methyl cellulose) having a weight average molecular weight of 660,000 was used as the thickening substance instead of the HEMC. The ink composition was 10% by mass of 2-propanol, 0.133% by mass of HPMC, 0.066% by mass of the binder component, 0.100% by mass of the silver nanowires (silver and the organic protective agent), and the balance of water. An experiment was performed under the same conditions as in Example 4 except that the ink composition of the intermediate product ink was changed to the above. The coating ink obtained in this example had a viscosity of 11.7 mPa·s.

<Example 14>

In this example, the copolymer B was used as the organic protective agent.

(Synthesis of Silver Nanowires)

At ordinary temperature, 48.38 g of a propylene glycol solution having a content of lithium chloride (produced by Sigma-Aldrich Corporation) of 1% by mass, 53.25 g of a propylene glycol solution having a content of potassium bromide (produced by Wako Pure Chemical Industries, Ltd.) of 0.25% by mass, 62.53 g of a propylene glycol solution having a content of lithium hydroxide (produced by Sigma-Aldrich Corporation) of 1% by mass, 33.28 g of a propylene glycol solution having a content of aluminum nitrate nonahydrate (produced by Kishida Chemical Co., Ltd.) of 2% by mass, and 106.24 g of the copolymer B were dissolved in 8,218.08 g of propylene glycol (produced by Wako Pure Chemical Industries, Ltd.), so as to form a solution A. In a separate vessel, 67.96 g of silver nitrate and 2.08 g of pure water were added to 101.92 g of propylene glycol and dissolved therein by stirring at 35°C, so as to provide a silver-containing liquid (solution B). The solution A was placed in a reaction vessel, and heated from ordinary temperature to 90°C under stirring at a rotation number of 175 rpm, and then the total amount of the solution B was added to the solution A through two addition ports over 1 minute. After completing the addition of the solution B, the reaction liquid was continuously stirred at 115°C for 24 hours. Thereafter, the reaction liquid was cooled to ordinary temperature to synthesize silver nanowires.

An intermediate product ink was produced under the same conditions as in Comparative Example 1. In this example, the intermediate product ink was subjected to the following dispersion treatment to provide a coating ink.

(Dispersion Treatment)

The dispersion treatment was performed by the thin film revolution method (rotary medialess disperser-emulsifier, produced by Ashizawa Finetech, Ltd.). At this time, the liquid amount was 7 L, and the mill peripheral speed was 30 m/s. The treatment was performed by the circulation method, and the treatment time was 15 minutes.

The silver nanowire ink after completing the dispersion treatment was used as a coating ink, and an experiment was performed under the same conditions as in Comparative Example 1.

<Example 15>

In this example, the copolymer C was used as the organic protective agent.

(Synthesis of Silver Nanowires)

At ordinary temperature, 48.38 g of a propylene glycol solution having a content of lithium chloride (produced by Sigma-Aldrich Corporation) of 1% by mass, 2.66 g of a propylene glycol solution having a content of potassium bromide (produced by Wako Pure Chemical Industries, Ltd.) of 0.25% by mass, 62.54 g of a propylene glycol solution having a content of lithium hydroxide (produced by Sigma-Aldrich Corporation) of 1% by mass, 66.56 g of a propylene glycol solution having a content of aluminum nitrate nonahydrate (produced by Kishida Chemical Co., Ltd.) of 2% by mass, and 619.76 g of the copolymer C were dissolved in 8,218.08 g of propylene glycol (produced by Wako Pure Chemical Industries, Ltd.), so as to form a solution A. In a separate vessel, 67.96 g of silver nitrate and 2.08 g of pure water were added to 101.92 g of propylene glycol and dissolved therein by stirring at 35°C, so as to provide a silver-containing liquid (solution B). The solution A was placed in a reaction vessel, and heated from ordinary temperature to 90°C under stirring at a rotation number of 175 rpm, and then the total amount of the solution B was added to the solution A through two addition ports over 1 minute. After completing the addition of the solution B, the reaction liquid was continuously stirred at 115°C for 24 hours. Thereafter, the reaction liquid was cooled to ordinary temperature to synthesize silver nanowires.

An intermediate product ink was produced under the same conditions as in Comparative Example 1. In this example, the intermediate product ink was subjected to the following dispersion treatment to provide a coating ink.

(Dispersion Treatment)

The dispersion treatment was performed by the thin film revolution method (rotary medialess disperser-emulsifier, produced by Ashizawa Finetech, Ltd.). At this time, the liquid amount was 7 L, and the mill peripheral speed was 30 m/s. The treatment was performed by the circulation method, and the treatment time was 15 minutes.

The silver nanowire ink after completing the dispersion treatment was used as a coating ink, and an experiment was performed under the same conditions as in Comparative Example 1.

<Example 16>

In this example, the PVP (polyvinylpyrrolidone) described above was used as the organic protective agent.

(Synthesis of Silver Nanowires)

At ordinary temperature, 89.6 g of an ethylene glycol solution having a content of tetrabutylammonium chloride (produced by Wako Pure Chemical Industries, Ltd.) of 5% by mass and 267.447 g of the PVP were dissolved in 8,850.24 g of ethylene glycol to form a solution A. In a separate vessel, 67.96 g of silver nitrate was added to a mixed solution of 109.76 g of ethylene glycol and 2.08 g of pure water and dissolved therein by stirring at 35°C, so as to provide a solution B containing silver. The solution A was placed in a reaction vessel, and heated from ordinary temperature to 90°C under stirring at a rotation number of 175 rpm, and then the total amount of the solution B was added to the solution A through two addition ports over 1 minute. After completing the addition of the solution B, the reaction liquid was continuously stirred at 90°C for 24 hours. Thereafter, the reaction liquid was cooled to ordinary temperature to synthesize silver nanowires.

An intermediate product ink was produced under the same conditions as in Comparative Example 1. In this example, the intermediate product ink was subjected to the following dispersion treatment to provide a coating ink.

(Dispersion Treatment)

The dispersion treatment was performed by the thin film revolution method (rotary medialess disperser-emulsifier, produced by Ashizawa Finetech, Ltd.). At this time, the liquid amount was 7 L, and the mill peripheral speed was 30 m/s. The treatment was performed by the circulation method, and the treatment time was 15 minutes.

The silver nanowire ink after completing the dispersion treatment was used as a coating ink, and an experiment was performed under the same conditions as in Comparative Example 1.

<Comparative Example 7>

An experiment was performed under the same conditions as in Example 4 except that the silver nanowires having an attached amount of the organic protective agent controlled considerably small were used in the ink formation. In this case, the attached amount of the organic protective agent was largely decreased by using pure water as the liquid medium to be replenished and prolonging the period of time of the crossflow circulation washing to 30 hours. As a result of the TG-DTA measurement, the silver nanowires had an attached amount of the organic protective agent of 1.1% by mass based on the total amount of the organic protective agent and silver. Fig. 4 shows the TG-DTA curve of the silver nanowire ink.

<Comparative Example 8>

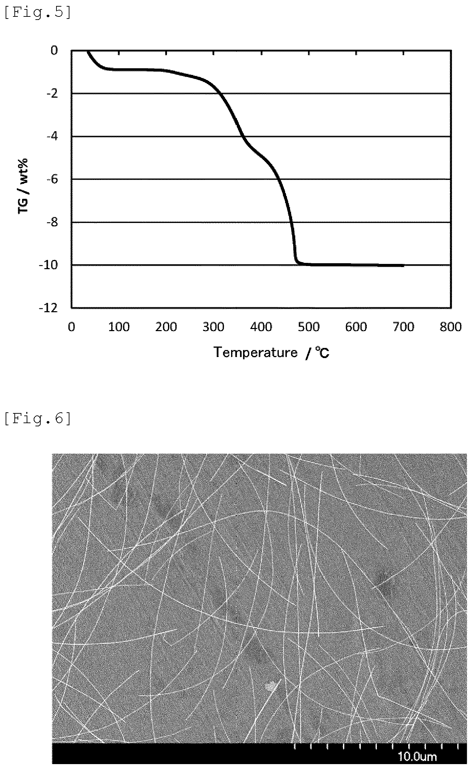

An experiment was performed under the same conditions as in Example 4 except that the silver nanowires having an attached amount of the organic protective agent controlled considerably large were used in the ink formation. In this case, the attached amount of the organic protective agent was secured considerably large by omitting the crossflow circulation washing. As a result of the TG-DTA measurement, the silver nanowires had an attached amount of the organic protective agent of 9.1% by mass based on the total amount of the organic protective agent and silver. Fig. 5 shows the TG-DTA curve of the silver nanowire ink.

<Comparative Example 9>

An experiment was performed under the same conditions as in Example 4 except that the dispersion treatment was omitted, and the intermediate product ink was used directly as the "coating ink".

Table 1

| Example No. | Silver nanowires used in ink formation | | | | | Intermediate product ink | | Dispersion treatment condition |
|---|---|---|---|---|---|---|---|---|
| | Mean diameter (nm) | Mean length (μm) | Mean aspect ratio | Organic protective agent | | Thickening substance | Presence of binder component mixed | |
| | | | | Kind | Attached amount *1 (% by mass) | | | |
| Comparative Example 1 | 26.5 | 16.7 | 630 | copolymer A | 6.1 | HEMC | yes | (no treatment) |
| Comparative Example 2 | 26.5 | 17.4 | 657 | copolymer A | 6.4 | HEMC | yes | ultrasonic dispersion method |
| Comparative Example 3 | 26.3 | 16.8 | 639 | copolymer A | 6.7 | HEMC | yes | water flow dispersion method |
| Comparative Example 4 | 26.1 | 18.8 | 720 | copolymer A | 6.1 | HEMC | yes | water flow dispersion method (number of pass: 20) |
| Comparative Example 5 | 26.0 | 18.4 | 708 | copolymer A | 6.3 | HEMC | yes | high-speed agitation dispersion method (Homomixer, 8000rpm, 1h) |
| Comparative Example 6 | 26.7 | 17.8 | 667 | copolymer A | 6.8 | HEMC | yes | high-speed agitation dispersion method (Cleamix, 15000rpm, 1h) |
| Example 1 | 26.9 | 18.2 | 677 | copolymer A | 6.2 | HEMC | yes | thin-film revolution method (Zero Mill, 16m/s, 3.3s) |
| Example 2 | 26.8 | 17.1 | 638 | copolymer A | 6.7 | HEMC | yes | thin-film revolution method (Zero Mill, 16m/s, 10s) |
| Example 3 | 26.5 | 17.7 | 668 | copolymer A | 6.3 | HEMC | yes | thin-film revolution method (Zero Mill, 24m/s, 1s) |
| Example 4 | 26.9 | 16.7 | 621 | copolymer A | 6.9 | HEMC | yes | thin-film revolution method (medialess, 30m/s, 15min) |
| Example 5 | 26.6 | 18.4 | 692 | copolymer A | 6.4 | HEMC | yes | thin-film revolution method (medialess, 40m/s, 1min) |
| Example 6 | 26.0 | 16.6 | 638 | copolymer A | 6.5 | HEMC | yes | thin-film revolution method (medialess, 40m/s, 3min) |
| Example 7 | 26.2 | 16.0 | 611 | copolymer A | 6.2 | HEMC | yes | thin-film revolution method (Filmix, 40m/s, 2L/min, once ) |

*1: mass proportion of organic protective agent based on total amount of silver and organic protective agent / Hatched cell: outside the scope of invention

Table 1 (continued)

| Example No. | Silver nanowires used in ink formation | | | | | Intermediate product ink | | Dispersion treatment condition |
|---|---|---|---|---|---|---|---|---|
| | Mean diameter (nm) | Mean length (μm) | Mean aspect ratio | Organic protective agent | | Thickening substance | Presence of binder component mixed | |
| | | | | Kind | Attached amount *1 (% by mass) | | | |
| Example 8 | 26.0 | 18.2 | 700 | copolymer A | 4.8 | HEMC | yes | thin-film revolution method (medialess, 30m/s, 15min) |
| Example 9 | 26.4 | 18.3 | 693 | copolymer A | 7.5 | HEMC | yes | thin-film revolution method (medialess, 30m/s, 15min) |
| Example 10 | 26.5 | 16.7 | 630 | copolymer A | 6.4 | HEMC | yes | thin-film revolution method (medialess, 30m/s, 15min) |
| Example 11 | 26.8 | 18.7 | 698 | copolymer A | 6.7 | HEMC | yes | thin-film revolution method (medialess, 30m/s, 15min) |
| Example 12 | 26.1 | 16.2 | 621 | copolymer A | 6.3 | HEMC | no | thin-film revolution method (medialess, 30m/s, 15min) |
| Example 13 | 26.3 | 19.0 | 722 | copolymer A | 6.6 | HEMC | yes | thin-film revolution method (medialess, 30m/s, 15min) |
| Example 14 | 29.8 | 13.7 | 460 | copolymer B | 6.5 | HEMC | yes | thin-film revolution method (medialess, 30m/s, 15min) |
| Example 15 | 28.2 | 16.1 | 571 | copolymer C | 7.0 | HEMC | yes | thin-film revolution method (medialess, 30m/s, 15min) |
| Example 16 | 29.5 | 13.9 | 471 | PVP | 6.3 | HEMC | yes | thin-film revolution method (medialess, 30m/s, 15min) |
| Comparative Example 7 | 27.0 | 18.3 | 678 | copolymer A | 1.1 | HEMC | yes | thin-film revolution method (medialess, 30m/s, 15min) |
| Comparative Example 8 | 26.8 | 18.1 | 675 | copolymer A | 9.1 | HEMC | yes | thin-film revolution method (medialess, 30m/s, 15min) |
| Comparative Example 9 | 26.1 | 16.8 | 644 | copolymer A | 8.8 | HEMC | yes | (no treatment) |

*1: mass proportion of organic protective agent based on total amount of silver and organic protective agent / Hatched cell: outside the scope of invention

Table 2

| Example No. | Coating ink | | | | | Transparent conductive film | | | | |
|---|---|---|---|---|---|---|---|---|---|---|
| | Number of > 7 μm particles (per mL) | Silver nanowires | | | | Mean silver concentration $C_{Ag}$ (mg/cm²) | Sheet resistance R (Ω/sq.) | Right member of expression (1) *2 | Evaluation of conductivity | Evaluation of appearance |
| | | Number of folds (per mm) | Mean diameter (nm) | Mean length (μm) | Mean aspect ratio | | | | | |
| Comparative Example 1 | 494 | - | 26.5 | 16.7 | 630 | 15.9 | 64.4 | 87.8 | A | B |
| Comparative Example 2 | 389 | 78.2 | 26.8 | 3.6 | 134 | 15.9 | 201.1 | 87.8 | B | B |
| Comparative Example 3 | 150 | 6.3 | 27.0 | 16.8 | 622 | 15.7 | 62.3 | 89.4 | A | B |
| Comparative Example 4 | 151 | 6.0 | 26.5 | 18.8 | 709 | 16.0 | 63.3 | 87.0 | A | B |
| Comparative Example 5 | 46 | 51.5 | 26.0 | 11.3 | 435 | 16.0 | 154.0 | 87.0 | B | A |
| Comparative Example 6 | 50 | 132.5 | 26.2 | 3.7 | 141 | 15.7 | 329.9 | 89.4 | B | A |
| Example 1 | 39 | 6.4 | 26.7 | 13.1 | 491 | 16.0 | 68.9 | 87.0 | A | A |
| Example 2 | 32 | 12.5 | 26.4 | 12.2 | 462 | 16.2 | 76.5 | 85.4 | A | A |
| Example 3 | 29 | 12.4 | 26.3 | 11.6 | 441 | 15.7 | 67.7 | 89.4 | A | A |
| Example 4 | 21 | 7.0 | 26.8 | 13.2 | 493 | 15.9 | 77.3 | 87.8 | A | A |
| Example 5 | 32 | 5.9 | 26.5 | 12.1 | 457 | 15.7 | 61.1 | 89.4 | A | A |
| Example 6 | 28 | 5.7 | 26.6 | 11.5 | 432 | 16.3 | 67.9 | 84.6 | A | A |
| Example 7 | 18 | 17.5 | 26.3 | 10.9 | 414 | 15.8 | 72.3 | 88.6 | A | A |
| Example 8 | 25 | 7.0 | 26.5 | 12.2 | 460 | 16.2 | 70.4 | 85.4 | A | A |
| Example 9 | 17 | 8.1 | 26.0 | 12.7 | 488 | 16.0 | 71.2 | 87.0 | A | A |
| Example 10 | 23 | 7.1 | 26.5 | 13.7 | 517 | 13.1 | 85.1 | 110.2 | A | A |
| Example 11 | 18 | 7.7 | 27.0 | 12.9 | 478 | 16.8 | 58.4 | 80.6 | A | A |
| Example 12 | 20 | 6.6 | 26.8 | 12.1 | 451 | 15.9 | 72.3 | 87.8 | A | A |
| Example 13 | 17 | 8.4 | 26.6 | 13.2 | 496 | 15.9 | 78.7 | 87.8 | A | A |
| Example 14 | 19 | 6.2 | 29.7 | 10.3 | 347 | 16.3 | 71.0 | 84.6 | A | A |
| Example 15 | 21 | 6.9 | 28.1 | 12.3 | 438 | 16.2 | 62.6 | 85.4 | A | A |
| Example 16 | 18 | 7.1 | 29.6 | 10.6 | 358 | 16.0 | 77.0 | 87.0 | A | A |
| Comparative Example 7 | 333 | 6.8 | 26.7 | 13.0 | 487 | 16.2 | 60.7 | 85.4 | A | B |
| Comparative Example 8 | 18 | 7.6 | 26.2 | 12.0 | 458 | 15.8 | 99.5 | 88.6 | B | A |
| Comparative Example 9 | 287 | - | 26.1 | 16.8 | 644 | 16.3 | 96.1 | 84.6 | B | B |

*2: $R \leq -8C_{Ag} + 215$ /    Hatched cell: outside the scope of invention

In each of Examples, the intermediate product ink was produced by using the silver nanowires having an attached amount of the organic protective agent having been decreased to the appropriate range, and subjected to the dispersion treatment by the thin film revolution method, and thereby the coating ink containing the wires having a small amount of coarse particle and having the sound form with less folds and a large aspect ratio was obtained. These coating inks were excellent in conductivity and useful for the formation of a transparent conductive film having good appearance.

On the other hand, in Comparative Example 1, the coating ink contained a large amount of coarse particles since no dispersion treatment was performed after the ink formation, and the transparent conductive film using the ink was inferior in appearance. In Comparative Example 2, the wires were largely damaged since the ultrasonic dispersion method was applied to the dispersion treatment. The ink also contained a large amount of coarse particles. Accordingly, the resulting transparent conductive film was inferior in both conductivity and appearance. In Comparative Examples 3 and 4, the water flow dispersion method was applied to the dispersion method, and coarse particles were not sufficiently removed under the conditions that mainly intended to suppress damages of the wires. Accordingly, it was difficult to improve both the conductivity and the appearance of the transparent conductive film. In Comparative Examples 5 and 6, the highspeed agitation dispersion method was applied to the dispersion method, which resulted in large damages of the wires, and it was difficult to provide a transparent conductor having good conductivity. In Comparative Example 7, the wires had poor dispersibility since the silver nanowires having the too small attached amount of the organic protective agent, and thus the intermediate product ink contained a large amount of aggregates of the wires. The aggregates were not sufficiently broken even by applying the thin film revolution method, and the coating ink having a large amount of coarse particles was obtained. As a result, the transparent conductive film had an inferior appearance. In Comparative Examples 8 and 9, it was considered that the contact opportunities of metallic silver of the wires in the transparent conductive film were decreased since the wires having the too large attached amount of the organic protective agent were used, and the resulting transparent conductive film was inferior in conductivity. In Comparative Example 9, the dispersibility of the wires was advantageous as compared to Comparative Example 1 since the attached amount of the organic protective agent was large. Accordingly, the number of coarse particles in the coating ink was smaller than Comparative Example 1. In this case, however, a transparent conductive film having a good appearance was not finally obtained.

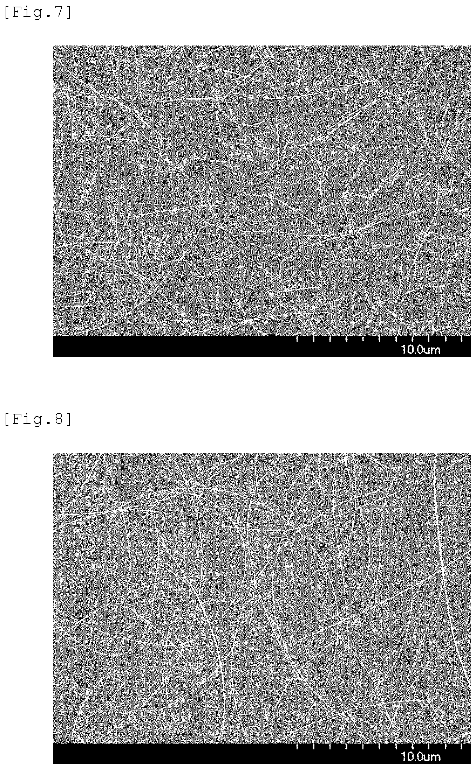

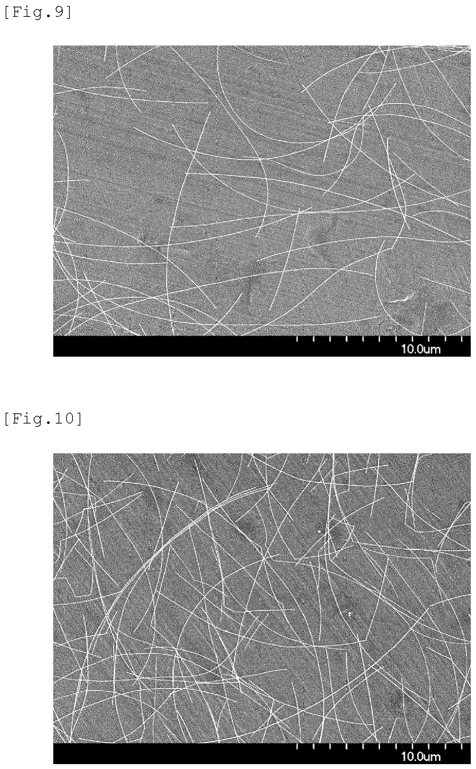

For reference, Figs. 6, 7, 8, 9, and 10 show the SEM images of the silver nanowires collected from the coating inks obtained in Example 1, Comparative Example 2, Comparative Example 3, Comparative Example 4, and Comparative Example 5, respectively.

Reference Sign List

1: tank
2: pump
3: crossflow filter
4: upstream side pressure gauge
5: downstream side pressure gauge
6: silver nanowire dispersion liquid before crossflow circulation washing
7: liquid medium to be replenished
10: circulation flow channel
30: filtrate

**Claims**

1. A silver nanowire ink comprising silver nanowires having a mean diameter of 50 nm or less having an organic protective agent attached to a surface thereof, dispersed in a liquid medium, the silver nanowires having a mean aspect ratio shown by a ratio of a mean length (nm) and a mean diameter (nm) of the silver nanowires of 300 or more; on an SEM (scanning electron microscope) image of the silver nanowires, the silver nanowires having a number of folds per unit length of the wires of 20.0 per mm or less, obtained by measuring all the silver nanowires observed in a view field over a total wire length of 1.0 mm or more; the silver nanowire ink having an existing amount of particles having a particle diameter exceeding 7 $\mu$m of 50 per mL or less per unit volume of the ink, measured with a liquid borne light extinction particle counter; the silver nanowire ink having such a property that in a conductive film obtained by forming a coated film having a mean silver concertation $C_{Ag}$ per unit projected area viewed in a thickness direction of $15\pm2$ mg/cm$^2$, with the silver nanowire ink as a coating liquid, followed by drying, on a PET (polyethylene terephthalate) substrate, the conductive film has a relationship between a sheet resistance R ($\Omega$/sq.)

of the conductive film and the $C_{Ag}$ (mg/cm$^2$) that satisfies the following expression (1):

$$R \leq - 8C_{Ag} + 215 \qquad (1)$$

2. The silver nanowire ink according to claim 1, wherein the organic protective agent is PVP (polyvinylpyrrolidone) or a copolymer of vinylpyrrolidone and another monomer.

3. The silver nanowire ink according to claim 1, wherein the organic protective agent is a copolymer of vinylpyrrolidone and a diallyldimethylammonium salt monomer.

4. The silver nanowire ink according to claim 1, wherein the silver nanowire ink comprises a water soluble cellulose ether in the liquid medium.

5. The silver nanowire ink according to claim 1, wherein the silver nanowire ink comprises a urethane resin in the liquid medium.

6. The silver nanowire ink according to any one of claims 1 to 5, wherein the silver nanowire ink has a viscosity at 25°C of from 1 to 40 mPa·s.

7. A method for producing a silver nanowire ink, comprising subjecting a silver nanowire ink intermediate product obtained through a step of adding a thickening substance to a silver nanowire dispersion liquid having dispersed therein silver nanowires having an organic protective agent attached to a surface thereof, having an attached amount of the organic protective agent of 1.5 to 8.0% by mass based on the total amount of the organic protective agent and silver, having the following form (A), to a dispersion treatment by a thin film revolution method, so as to control the silver nanowires in the ink to have the following form (B), and to provide such a property that the ink has an existing amount of particles having a particle diameter exceeding 7 μm of 50 per mL or less per unit volume of the ink, measured with a liquid borne light extinction particle counter:

   (A) a silver nanowire form having a mean diameter of 50 nm or less, and a mean aspect ratio shown by a ratio of a mean length (nm) and a mean diameter (nm) of 350 or more,
   (B) a silver nanowire form having a mean aspect ratio shown by a ratio of a mean length (nm) and a mean diameter (nm) of 300 or more, and on an SEM (scanning electron microscope) image of the silver nanowires, a number of folds per unit length of the wires of 20.0 per mm or less, obtained by measuring all the silver nanowires observed in a view field over a total wire length of 1.0 mm or more.

8. The method for producing a silver nanowire ink according to claim 7, wherein the organic protective agent is PVP (polyvinylpyrrolidone) or a copolymer of vinylpyrrolidone and another monomer.

9. The method for producing a silver nanowire ink according to claim 7, wherein the organic protective agent is a copolymer of vinylpyrrolidone and a diallyldimethylammonium salt monomer.

10. The method for producing a silver nanowire ink according to any one of claims 7 to 9, wherein the silver nanowire ink intermediate product further contains a binder component.

EP 3 745 423 A1

[Fig.1]

[Fig.2]

[Fig.3]

[Fig.4]

[Fig.5]

[Fig.6]

10.0um

[Fig.7]

[Fig.8]

[Fig.9]

[Fig.10]

**EP 3 745 423 A1**

<div align="center">

**INTERNATIONAL SEARCH REPORT**

</div>

| | International application No. |
|---|---|
| | PCT/JP2019/001435 |

**A. CLASSIFICATION OF SUBJECT MATTER**
Int.Cl. H01B1/22(2006.01)i, B22F1/00(2006.01)i, B22F1/02(2006.01)i,
B22F9/00(2006.01)i, B82Y30/00(2011.01)i, B82Y40/00(2011.01)i,
H01B1/00(2006.01)i, H01B5/14(2006.01)i, H01B13/00(2006.01)i
According to International Patent Classification (IPC) or to both national classification and IPC

**B. FIELDS SEARCHED**

Minimum documentation searched (classification system followed by classification symbols)
Int.Cl. H01B1/22, B22F1/00, B22F1/02, B22F9/00, B82Y30/00, B82Y40/00,
H01B1/00, H01B5/14, H01B13/00

Documentation searched other than minimum documentation to the extent that such documents are included in the fields searched
Published examined utility model applications of Japan    1922-1996
Published unexamined utility model applications of Japan   1971-2019
Registered utility model specifications of Japan          1996-2019
Published registered utility model applications of Japan   1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2018/003759 A1 (DOWA ELECTRONICS MATERIALS CORPORATION) 04 January 2018, claims, paragraphs [0017]-[0035], examples (Family: none) | 1-10 |
| Y | JP 2014-209573 A (FUJIFILM CORPORATION) 06 November 2014, claims 1, 9, paragraphs [0043]-[0049], [0256]-[0258] & US 2016/0013392 A1, claims 1, 9, paragraphs [0078]-[0086], [0358]-[0362] & CN 105103317 A | 1-10 |
| Y | WO 2017/209230 A1 (DOWA ELECTRONICS MATERIALS CORPORATION) 07 December 2017, claims, paragraph [0047] & TW 201804479 A | 7-10 |

☒ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27.03.2019 | 09.04.2019 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

31

**INTERNATIONAL SEARCH REPORT**

| International application No. |
| --- |
| PCT/JP2019/001435 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2015-180772 A (DOWA HOLDINGS CO., LTD.) 15 October 2015, claims, examples<br>& US 2016/0368049 A1, claims, examples & EP 3115135 A1 & CN 106068166 A | 1-10 |
| A | JP 2016-55283 A (DOWA HOLDINGS CO., LTD.) 21 April 2016, claims, examples<br>& US 2017/0278596 A1, claims, examples & CN 106999897 A | 1-10 |
| P, A | JP 2018-95962 A (DOWA ELECTRONICS MATERIALS CORPORATION) 21 June 2018, claims, examples<br>& TW 201829097 A | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016066590 A
- JP 2016076241 A
- JP 2014209573 A
- JP 2015180772 A
- JP 2016055283 A